# EUROPEAN PATENT APPLICATION

(11) **EP 2 840 248 A1**
(43) Date of publication of application: **25.02.2015**
(21) Application number: 14179759.7
(22) Date of filing: 04.08.2014
(51) Int. Cl.: F02D 23/00, F02B 37/18, F02D 41/12, F04D 27/02, F02D 11/10, F02B 37/12, F02D 41/14, F02D 37/02, F02D 19/02, F02P 5/04

(54) **Control method and control system for internal combustion engine with turbocharger**

(30) Priority: 15.08.2013 CN 201310355204; 23.01.2014 US 201414162413
(71) Applicant: Honeywell International Inc., Morristown, NJ 07962-2245 (US)
(72) Inventor: Shao, Dezhi, Morristown, NJ New Jersey 07962-2245 (US); Gu, Ronglei, Morristown, NJ New Jersey 07962-2245 (US); Wang, James, Morristown, NJ New Jersey 07962-2245 (US); Di Martino, Paolo, Morristown, NJ New Jersey 07962-2245 (US)
(74) Representative: Houghton, Mark Phillip

(57) **Abstract**

The present invention provides engine control capable of receiving an indication of the pedal position, and pre-processing the indication of the pedal position to determine whether the received indication of the pedal position corresponds to the antisurge mode activation condition (31). In response to the received indication of the pedal position corresponding to the antisurge mode activation condition, the boost pressure and the engine speed are used to look up the static control parameter lookup table to select a control parameter indicating an air flow requirement (32). The selected control parameter is sent to the ECU (60) so as to control the engine using the air flow requirement indicated by said control parameter.

## Description

### TECHNICAL FIELD

The present invention relate generally to an engine control technology and, more particularly, to a method and system for providing improved engine control.

### BACKGROUND OF THE INVENTION

Gasoline and natural gas engines have been a dominant mode of providing propulsion for numerous types of vehicles for many years. As such, innovations aimed at improving gasoline and natural gas engine performance in areas such as power and efficiency have continued to be desirable goals. A turbocharger is one example of an innovation that has improved gasoline engine performance. The turbocharger may be thought of as a gas compressor used to increase the mass of air entering the engine to create more engine power. Thus, the turbocharger is an air compressor that is driven by exhaust gases generated by operation of an internal combustion engine, which can increase the air flow entering into the internal combustion engine or boiler, thereby improving machine efficiency. The turbocharger is usually used in a car engine to increase the horsepower output of the internal combustion engine by using the heat and flow of the exhaust gases.

On gasoline and natural gas turbocharged engines, a potential problem of compressor surge exists in situations where the throttle is closed. Such situations may be particularly noticeable when the throttle is closed from an initially substantially open position. In this regard, when the throttle is closed, compressed air will flow to the throttle, but will have no exit due to the closure of the throttle. The compressed air may then decompress back across the turbocharger (causing the "surge"), which may be the only path the now blocked air can take. The surge can raise the pressure of the air to a level that can cause engine damage or undesirable noise due to turbulence.

In order to prevent or at least reduce the impact of compressor surge, turbocharged engines typically include a device such as a recirculation valve. The device operates to provide air between the turbocharger and the throttle valve with a flow path when the throttle is closed, which vents off the excess air pressure, to maintain the turbo spinning at a safe area. The air is usually recycled back into the turbocharger inlet when using a recirculation valve, but can also be vented to the atmosphere when using a blowoff valve. By providing an escape air path, engine damage and noise may be avoided as well as reduction of the phenomenon of turbo lag due to slowing down of the turbo that may take place as a result of a surge.

For a turbocharger, surge is an unstable operating condition and is thus not good. Surge is a kind of physical restriction and cannot be completely avoided by the turbocharger *per se.* When the turbocharger is mounted on an engine/vehicle, it may enter a surge area under a specific operating condition. Although the recirculation valve or blowoff valve may be effective at preventing surge conditions, the recirculation valve does not typically provide improvement in engine power or efficiency, but still adds to cost and complexity of the engine. Accordingly, it may be desirable to provide a mechanism for avoiding use of the recirculation valve.

### SUMMARY OF THE INVENTION

An object of the present invention is to improve the operation condition of the turbocharged engine through engine control. The method of the present invention uses a pedal position as an input to evaluate the surge risk. When a surge risk is detected, said method provides a control instruction which is calculated according to a lookup table based on an engine revolutions per minute and a boost pressure. An engine controller makes the turbocharger to continuously work in a safe area without using any additional hardware according to said control instruction.

According to one aspect of the present invention, an engine control method is provided, which comprises: receiving an indication of the pedal position; pre-processing the indication of the pedal position to determine whether the received indication of the pedal position corresponds to the antisurge mode activation condition; in response to the received indication of the pedal position corresponding to the antisurge mode activation condition, using the boost pressure and the engine speed to look up the static control parameter lookup table to select a control parameter indicating an air flow requirement; and sending the selected control parameter to the ECU so as to control the engine using the air flow requirement indicated by said control parameter. According to another aspect of the present invention, an engine control system is provided, which comprises: a gasoline or natural gas engine; a turbocharger combined with said engine; an engine control unit which comprises an antisurge control module and is configured to control at least some actuators associated with the engine and turbocharger, wherein, said antisurge control module comprises a surge pre-detection module configured to receive an indication of the pedal position and pre-process the indication of the pedal position to determine whether the received indication of the pedal position corresponds to the antisurge mode activation condition; an initial control parameter lookup table module which includes a static control parameter lookup table and is configured to use the boost pressure and engine speed to look up the control parameter lookup table to select a control parameter indicating the air flow requirement in response to the indication of the pedal position corresponding to the antisurge mode activation condition; and a control parameter processing module, configured to receive the selected control parameter and send said control parameter to the ECU so as to control the engine using the air flow requirement indicated by said control parameter.

The present invention uses only the pedal position signal to evaluate the surge risk, and the present invention uses the engine speed rpm and the boost pressure to search for the initial control parameter. In addition, the present invention also uses an attenuation curve to control the control parameter in a specific time.

By making the method of the present invention to be a part of the engine control software (process), the turbocharged engine is able to not enter the "surge" area. Compared to the existing dominant methods, the method of the present invention removes the hardware and has a better performance. The method of the present invention can reduce system cost, reduce turbo design complexity so that the turbo can be better standardized and be better packaged in vehicles, and reduce the risk of turbo failure. By means of the method of the present invention, such hardware as the recirculation valve or blowoff valve is removed, so development of software only needs to be done once for all applications, which reduces the period for calibration of one application to, for example, two months. Since the risk of mechanical failure is removed, better reliability is achieved.

### BRIEF DESCRIPTION OF THE DRAWINGS

Having thus described the invention in general terms, reference will now be made to the accompanying drawings, which are not necessarily drawn to scale, and wherein:
FIG. 1 is a schematic block diagram of a system according to an exemplary embodiment of the present invention;
FIG. 2 illustrates a block diagram showing an apparatus for providing an antisurge operating mode for a turbocharged engine according to an exemplary embodiment of the present invention;
FIG. 3 illustrates a block diagram showing an engine control module, an antisurge control module as well as communication therebetween according to an exemplary embodiment of the present invention;
FIG. 4 is a flowchart according to a method of providing an antisurge operating mode for a turbocharged engine according to an exemplary embodiment of the present invention.

### DETAILED DESCRIPTION OF THE DRAWINGS

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein. Like reference numerals refer to like elements throughout. In the detailed descriptions below, the embodiments are described in sufficient detail to enable those skilled in the art to implement the invention. It shall be understood that other embodiments can be used without departing from the scope of the present invention. Therefore, the following detailed descriptions should not be understood in a restrictive way.

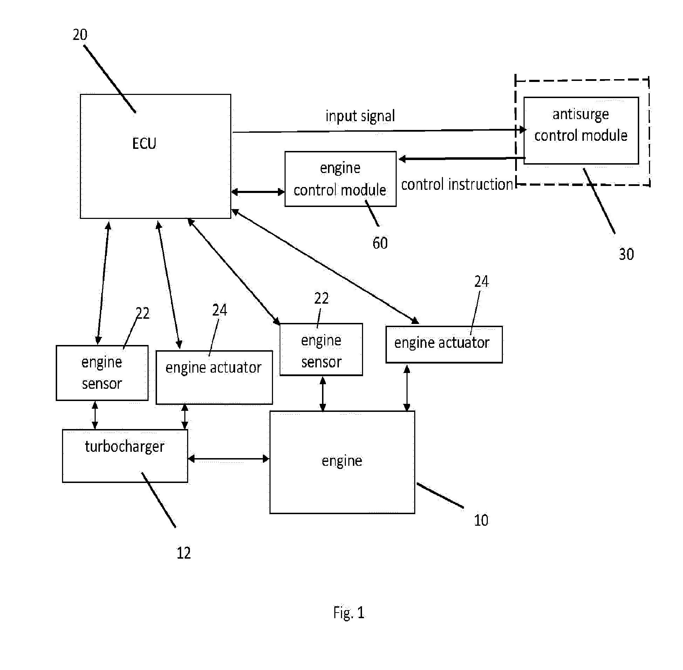

Referring now to FIG. 1, a schematic block diagram showing certain elements of a system including an engine control unit according to an exemplary embodiment of the present invention is provided. However, FIG. 1 is illustrative of one exemplary embodiment, and it should be understood that other architectures including additional or even fewer elements may also be employed in connection with practicing embodiments of the present invention. The system includes an engine 10, which may be a gasoline engine or a natural gas engine. The engine 10 may be operable to be combined with a turbocharger 12 so as to be in operable communication with the turbocharger 12.

The system may also include an engine control unit (ECU) 20. The ECU 20 is an electronic control unit that may include hardware and/or software components configured to control various aspects of engine operation. In particular, the ECU 20 may receive inputs from various engine sensors 22 and control various engine actuators 24. The engine sensors 22 may be disposed at various points in the engine 10 to measure or otherwise determine corresponding engine parameters. Examples of engine sensors 22 may include a throttle position sensor, air temperature sensor, engine revolutions per minute (RPM) sensor, engine load sensor, accelerator pedal position sensor and/or other sensors. The engine actuators 24 may include various relays, solenoids, ignition coils, or other electrically operable devices that may be used to control corresponding engine parameters.

In an exemplary embodiment, the ECU 20 may also be in communication with other sensors and actuators associated with a vehicle in which the engine 10 is disposed. In some cases, the ECU 20 may be in communication with one or more turbo sensors 26 (e.g., turbocharger wastegate position) and/or one or more turbo actuators 28. As such, the ECU 20 may receive information on engine parameters from any of the sensors with which the ECU 20 has communication and provide control parameters to any of the actuators with which the ECU 20 has communication.

In an exemplary embodiment, the ECU 20 may further include an antisurge control module 30. The antisurge control module 30 may be any means such as a device or circuitry embodied in hardware, software or a combination of hardware and software that is configured to perform the corresponding functions of the antisurge control module 30 as described herein. In some embodiments, the antisurge control module 30 may be configured to augment ECU 20 capabilities with respect to surge prevention by identifying engine conditions under which action is to be taken for antisurge activity and with respect to taking or directing actions (e.g., via control of various engine actuators 24 and/or turbo actuators 28) with respect to antisurge activity. Thus, in an exemplary embodiment, the antisurge control module 30 may merely provide additional functionality to the ECU 20. However, in some embodiments, the antisurge control module 30 may directly provide such functionality itself. As such, as an alternative to the exemplary embodiment of FIG. 1 in which the ECU 20 controls the engine actuators 24 and/or turbo actuators 28 and receives information from the engine sensors 22 and/or turbo sensors 26, the antisurge control module 30 may have direct communication with some or all of the engine actuators 24 and/or turbo actuators 28 and the engine sensors 22 and/or turbo sensors 26 in some cases.

Accordingly, embodiments of the present invention may employ the antisurge control module 30 to prevent or reduce the impact of surge in response to throttle closing after the operation of substantially opening the throttle. Furthermore, the use of the antisurge control module 30 may enable the engine 10 to be produced without a recirculation valve or other diversion device aimed at limiting or preventing surge.

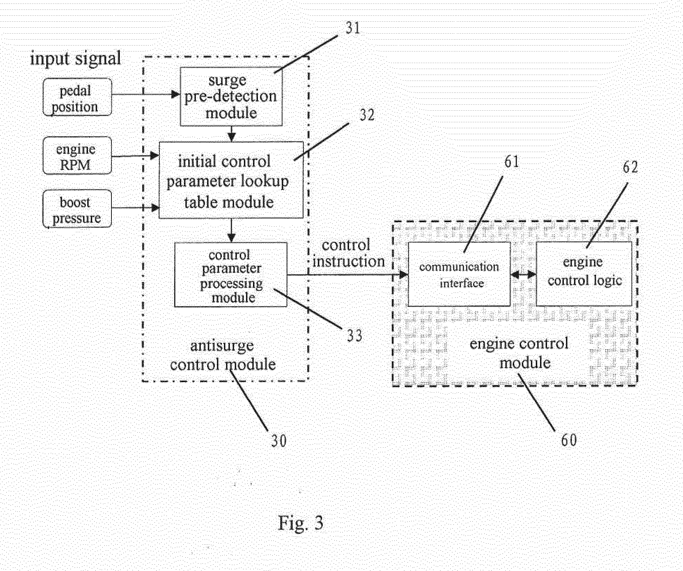

The system may further include an engine control module 60 which will form an engine control model under the antisurge mode according to a control instruction from the antisurge control module 30. Communication between the engine control module 60 and the antisurge control module 30 will be described in detail in Fig. 3.

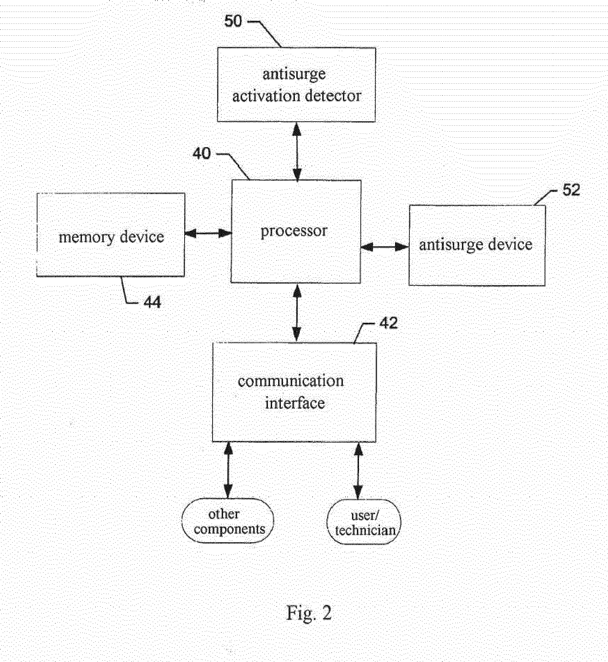

FIG. 2 shows a block diagram view of one example of an apparatus configured to perform exemplary embodiments of the present invention. However, it should be noted that an apparatus for enabling engine control for anti-surge operation (e.g., in the absence of a recirculation or air diversion valve for such purpose) need not include all of the devices shown in FIG. 2 and could, in some cases, include more or different modules. Moreover, the apparatus may be embodied entirely at a single device (e.g., the antisurge control module 30) or may be embodied at a combination of devices (e.g., in some cases, some of the components shown in FIG. 2 may be portions of the ECU 20, while others are portions of the antisurge control module 30). As such, the embodiment of FIG. 2 is merely provided to be exemplary of some possible embodiments that may employ the present invention.

In an exemplary embodiment, the apparatus may include or otherwise be in communication with a processor 40, a communication interface 42 and a memory device 44. The memory device 44 may include, for example, volatile and/or non-volatile memory. The memory device 44 may be configured to store information, data, applications, modules, instructions or the like for enabling the apparatus to carry out various functions in accordance with exemplary embodiments of the present invention. For example, the memory device 44 could be configured to buffer input data for processing by the processor 40. Additionally or alternatively, the memory device 44 could be configured to store instructions corresponding to an application for execution by the processor 40.

The processor 40 may be a processor of the ECU 20 or a co-processor or processor of the antisurge control module 30. The processor 40 may be embodied in a number of different ways. For example, the processor 40 may be embodied as a processing element, a coprocessor, a controller or various other processing means or devices including integrated circuits such as an ASIC (application specific integrated circuit), FPGA (field programmable gate array) a hardware accelerator or the like. In an exemplary embodiment, the processor 40 may be configured to execute instructions stored in the memory device 44 or otherwise accessible to the processor 40. As such, whether configured by hardware or software methods, or by a combination thereof, the processor 40 may represent an entity capable of performing operations according to embodiments of the present invention while configured accordingly. Thus, for example, when the processor 40 is embodied as an ASIC, FPGA or the like, the processor 40 may be specifically configured hardware for conducting the operations described herein. Alternatively, as another example, when the processor 40 is embodied as an executor of software instructions, the instructions may specifically configure the processor 40, which may otherwise be a general purpose processing element if not for the specific configuration provided by the instructions, to perform the algorithms and/or operations described herein. However, in some cases, the processor 40 may be a processor of a specific device (e.g., the ECU 20) adapted for employing embodiments of the present invention by further configuration of the processor 40 by instructions for performing the algorithms and/or operations described herein (e.g., by addition of the antisurge control module 30).

Meanwhile, the communication interface 42 may be any means such as a device or circuitry embodied in either hardware, software, or a combination of hardware and software that is configured to receive and/or transmit data from/to sensors, actuators, or other devices or modules in communication with the apparatus (e.g., the engine actuators 24 and/or turbo actuators 28 and the engine sensors 22 and/or turbo sensors 26). In this regard, the communication interface 42 may include, for example, supporting wiring, circuitry, hardware and/or software for enabling communications with vehicles and/or engine components. In some environments, the communication interface 42 may include a communication port for receiving information from a user interface and/or a communication port for enabling dialog equipment to be placed into communication with the ECU 20.

In an exemplary embodiment, the processor 40 may be embodied as, include or otherwise control an antisurge activation detector 50 and an antisurge device 52. The antisurge activation detector 50 and the antisurge device 52 may each be any means such as a device or circuitry embodied in hardware, software or a combination of hardware and software that is configured to perform the corresponding functions of the antisurge activation detector 50 and the antisurge device 52, respectively. The antisurge activation detector 50 and the antisurge device 52 may, in some cases, define the antisurge control module 30 or be portions thereof along with some or all of the other components in FIG. 2. In situations where the antisurge activation detector 50 and the antisurge device 52 define the antisurge control module 30, the communication interface 42 may communicate with a communication interface of the ECU 20 and may provide information to and receive information from the actuators, sensors and other devices of the engine 10 and/or turbocharger 12. In embodiments where the communication interface 42 is also a portion of the antisurge control module 30, the communication interface 42 may be in communication with the ECU 20 to provide information to and receive information from the actuators, sensors and other devices of the engine 10 and/or turbocharger 12, as appropriate, via the ECU 20.

The antisurge activation detector 50 may be configured to detect situations in which antisurge operations are to be implemented. As such, the antisurge activation detector 50 may be configured to monitor engine parameters in order to determine whether the parameters are indicative of conditions that would otherwise potentially cause a surge. In response to detection of conditions that would otherwise potentially cause the surge, the antisurge activation detector 50 may be configured to activate antisurge operation by activating the antisurge device 52.

The antisurge device 52 may be configured to employ data recorded for a predetermined time period prior to the activation of antisurge operation triggered by the antisurge activation detector 50 to control engine parameters for surge prevention. In an exemplary embodiment, the antisurge device 52 may provide control signals to the engine actuators 24 and/or turbo actuators 28 to switch from a normal operating condition to antisurge operation. The control of the engine actuators 24 and/or turbo actuators 28 may, for example, include control of wastegate setposition, throttle position, injection rate and/or ignition angle.

FIG. 3 illustrates a block diagram showing an engine control module, an antisurge control module as well as communication therebetween according to an exemplary embodiment of the present invention. The antisurge control module 30 comprises a surge pre-detection module 31, an initial control parameter lookup table module 32 and a control parameter processing module 33. The initial control parameter lookup table module 32 includes a static control parameter lookup table which includes, for example, control parameters generated according to experience. The static lookup table can be very easily calibrated. For example, the control parameter indicating the air flow requirement included in the static lookup table can be modified according to the engine pressure and/or temperature. The engine pressure and/or engine temperature for modification are from the pressure or temperature at a specific position in the turbocharger related area, such as the pressure or temperature at a certain position in an inlet pipe. The control parameter indicating the air flow requirement may be a physical parameter related to the air flow, such as a throttle position, an intake manifold pressure, etc., or a control parameter representing indirect air flow requirement, such as a torque, etc. Each parameter in the control parameter lookup table corresponds to a control instruction. The surge pre-detection module 31 receives the pedal position as an input. The surge pre-detection module 31 uses one or more of the atmospheric pressure, the ambient temperature and the modification to the engine inlet temperature/pressure to pre-process indication of the pedal position to determine whether the received indication of the pedal position corresponds to an antisurge mode activation condition. The initial control parameter lookup table module 32 receives input relating to the operating parameters of the engine, such as the boost pressure and engine speed (rpm) or other parameters like the atmospheric pressure, from the ECU 20.

In an exemplary embodiment, the surge pre-detection module 31 determines according to the input pedal position whether the input indication of the pedal position corresponds to an antisurge mode activation condition. In another exemplary embodiment, the surge pre-detection module 31 evaluates the pedal state according to the input pedal position, and uses the evaluated pedal state, an engine state and a clock to determine whether the antisurge mode activation condition is met. Specifically, the acceleration pedal position is received by the surge pre-detection module 31 after being low pass filtered. The surge pre-detection module 31 determines the pedal deviation (du/dt) according to the received acceleration pedal position. The determined pedal deviation is compared to a minimum pedal deviation threshold and a maximum pedal deviation threshold, respectively. If the pedal deviation is smaller than or equal to the minimum pedal deviation threshold, the timer is reset and the engine is determined to be in an antisurge state. If the pedal deviation is greater than or equal to the maximum pedal deviation threshold, or the time of the timer is greater than a threshold time (T), it will be determined that the engine is not in an antisurge mode and will operate in a normal mode. If it is determined that the engine is in an antisurge state, it will be determined that the received indication of the pedal position corresponds to the antisurge mode activation condition. Otherwise, it will be determined that the received indication of the pedal position does not correspond to the antisurge mode activation condition and a target control value (e.g. a desired engine torque) will be used to control the engine. For example, the desired engine torque is determined on the basis of the accelerator pedal position and the vehicle speed. The surge pre-detection module 31 sends an instruction of opening an exhaust bypass valve when the received indication of the pedal position corresponds to the antisurge mode activation condition.

In an exemplary embodiment, in response to the received indication of the pedal position corresponding to the antisurge mode activation condition, the control value lookup table 32 is looked up using the boost pressure and the engine speed to select a control parameter indicating an air flow requirement such as a minimum air flow requirement. In another embodiment, an attenuation parameter is used to attenuate the control value of the control parameter found. The attenuation parameter can be a modification parameter that varies over time. The variation of the attenuation parameter may be linear or it may be a function. The control parameter processing module 33 receives the selected control parameter and uses one or more of the atmospheric pressure, the ambient temperature and the engine inlet temperature/pressure to modify the selected control parameter. The control parameter processing module 33 provides the obtained (modified) control instruction including a control parameter indicating the air flow requirement to an engine control module 60. In on embodiment, the control instruction includes a control value attenuated control value. In an exemplary embodiment, the antisurge control module 30 is configured to receive an indication of the pedal position; pre-process the indication of the pedal position to determine whether the received indication of the pedal position corresponds to the antisurge mode activation condition; look up the control parameter lookup table using the boost pressure and engine speed to select a parameter indicating the air flow requirement in response to the received indication of the pedal position corresponding to the antisurge mode activation condition; and send the selected control parameter to the ECU so as to use the air flow requirement indicated by said control parameter to control the engine. In an exemplary embodiment, the parameter is sent to the ECU after being further processed by the engine control module 60.

The engine control module 60 includes a communication interface 61 and an engine control logic 62. The communication interface 61 receives from the antisurge control module 30 a control instruction and provides the control instruction to the engine control logic 62 which generates an engine control model according to the control instruction. The ECU operates according to the generated engine control model.

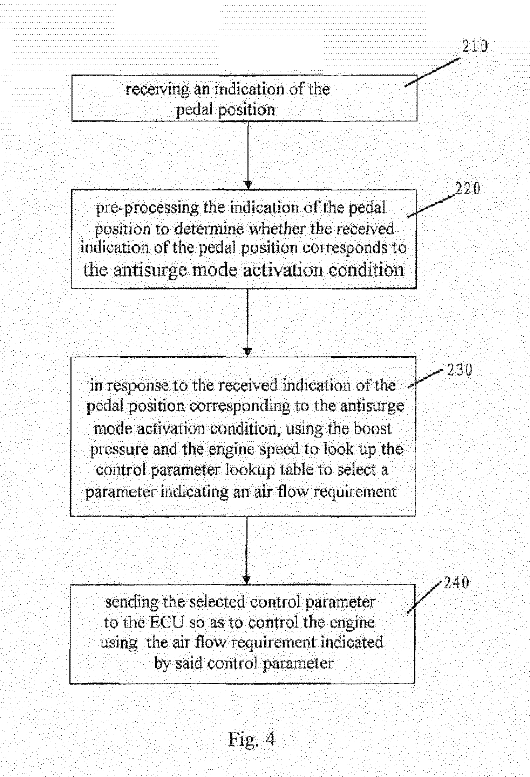

FIG. 4 is a flowchart according to a method of providing an antisurge operating mode for a turbocharged engine according to an exemplary embodiment of the present invention. It will be understood that each block or step of the flowchart, and combinations of blocks in the flowchart, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory device (e.g., memory device 46) and executed by a processor (e.g., processor 40). As will be appreciated, any such computer program instructions may be loaded onto a computer or other programmable apparatus (i.e., hardware) to produce a machine, such that the instructions which execute on the computer or other programmable apparatus create means for implementing the functions specified in the flowchart block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowchart block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowchart block(s) or step(s).

Accordingly, blocks or steps of the flowchart support combinations of means for performing the specified functions, combinations of steps for performing the specified functions and program instruction means for performing the specified functions. It will also be understood that one or more blocks or steps of the flowchart, and combinations of blocks or steps in the flowchart, can be implemented by special purpose hardware-based computer systems which perform the specified functions or steps, or combinations of special purpose hardware and computer instructions.

In this regard, the method for providing an antisurge operation mode to the turbocharged engine as provided in FIG. 4 may include receiving an indication of the pedal position (210); pre-processing the indication of the pedal position to determine whether the received indication of the pedal position corresponds to the antisurge mode activation condition (220); in response to the received indication of the pedal position corresponding to the antisurge mode activation condition, using the boost pressure and the engine speed to look up the control parameter lookup table to select a parameter indicating an air flow requirement (230); and sending the selected control parameter to the ECU so as to control the engine using the air flow requirement indicated by said control parameter (240).

In an exemplary embodiment, an apparatus for performing the method above may include a processor (e.g., the processor 40) configured to perform each of the operations (200-240) described above. The processor may, for example, be configured to perform the operations by executing stored instructions or an algorithm for performing each of the operations. Alternatively, the apparatus may include means for performing each of the operations described above. In this regard, according to an exemplary embodiment, examples of means for performing operations 200 to 240 may include, for example, the antisurge activation detector 50, the antisurge device 52, or the processor 40.

The present invention can be embodied in other specific forms without departing the substantive characteristics thereof. In all aspects, the embodiments are only illustrative but not restrictive. Thus the scope of the present invention is defined by the appended claims instead of the above descriptions. All variations made in the sense and scope of equivalents of the claims shall be included in the scope of the present invention.

## Claims

1. An engine control method, which comprises,
receiving an indication of the pedal position;
pre-processing the indication of the pedal position to determine whether the received indication of the pedal position corresponds to the antisurge mode activation condition;
in response to the received indication of the pedal position corresponding to the antisurge mode activation condition, using the boost pressure and the engine speed to look up the static control parameter lookup table to select a control parameter indicating an air flow requirement; and
ending the selected control parameter to the ECU so as to control the engine using the air flow requirement indicated by said control parameter.

2. The engine control method according to claim 1, further comprising: sending an instruction of opening an exhaust bypass valve when the received indication of the pedal position corresponds to the antisurge mode activation condition

3. The engine control method according to claim 1, wherein pre-processing the indication of the pedal position to determine whether the received indication of the pedal position corresponds to the antisurge mode activation condition includes using one or more of the atmospheric pressure, the ambient temperature, and the modification to the engine inlet temperature/pressure.

4. The engine control method according to claim 1, further comprising using one or more of the atmospheric pressure, the ambient temperature and the engine inlet temperature/pressure to modify the selected control parameter

5. The engine control method according to claim 1, further comprising evaluating the pedal state according to the received pedal position, and using at least one of the evaluated pedal state, an engine state and a clock to determine the antisurge state.

6. The engine control method according to claim 5, further comprising: if it is determined that the received indication of the pedal position corresponds to the antisurge mode activation condition, determining that the engine is in an antisurge state; otherwise, determining that the engine is not in an antisurge state and using a target control value to control the engine.

7. The engine control method according to claim 6, wherein the target control value is a desired engine torque, which is determined on the basis of the accelerator pedal position and vehicle speed.

8. The engine control method according to claim 1, further comprising: attenuating the control value of the control parameter found using an attenuation parameter.

9. The engine control method according to claim 8, wherein the attenuation parameter includes a modification parameter that varies over time.

10. The engine control method according to claim 9, wherein the variation of the attenuation parameter is linear or is a function.

11. The engine control method according to claim 1, wherein the control parameter indicating the air flow requirement includes parameters related to the air flow.

12. The engine control method according to claim 11, wherein the parameters related to the air flow include the throttle position, intake manifold pressure and torque.

13. An engine control system, comprising:
a gasoline or natural gas engine;
a turbocharger combined with said engine;
an engine control unit, which comprises: an antisurge control module and is configured to control at least some actuators associated with the engine and turbocharger, wherein, said antisurge control module comprises:
a surge pre-detection module configured to receive an indication of the pedal position and pre-process the indication of the pedal position to determine whether the received indication of the pedal position corresponds to the antisurge mode activation condition;
an initial control parameter lookup table module which includes a static control parameter lookup table and is configured to use the boost pressure and engine speed to look up the control parameter lookup table to select a control parameter indicating the air flow requirement in response to the indication of the pedal position corresponding to the antisurge mode activation condition; and
a control parameter processing module, configured to receive the selected control parameter and send said control parameter to the ECU so as to control the engine using the air flow requirement indicated by said control parameter

14. The engine control system according to claim 13, wherein the antisurge control module is configured to send an instruction of opening an exhaust bypass valve when the received indication of the pedal position corresponds to the antisurge mode activation condition.

15. The engine control system according to claim 13, wherein the surge pre-detection module pre-processes the indication of the pedal position using one or more of the atmospheric pressure, the ambient temperature, and the modification to the engine inlet temperature/pressure so as to determine whether the received indication of the pedal position corresponds to the antisurge mode activation condition.

16. The engine control system according to claim 13, wherein the control parameter processing module is further configured to modify the selected control parameter using one or more of the atmospheric pressure, the ambient temperature and the engine inlet temperature/pressure.

17. The engine control system according to claim 13, wherein the surge pre-detection module is further configured to evaluate the pedal state according to the received pedal position, and use at least one of the evaluated pedal state, an engine state and a clock to determine the antisurge state.

18. The engine control system according to claim 17, wherein the surge pre-detection module is further configured to determine that the engine is in an antisurge state if it is determined that the received indication of the pedal position corresponds to the antisurge mode activation condition; otherwise, determine that the engine is not in an antisurge state and use a target control value to control the engine.

19. The engine control system according to claim 18, wherein the target control value is a desired engine torque, which is determined on the basis of the accelerator pedal position and vehicle speed.

20. The engine control system according to claim 13, wherein the initial control parameter lookup table module is further configured to attenuate the control value of the control parameter found using an attenuation parameter.

21. The engine control system according to claim 20, wherein the attenuation parameter includes a modification parameter that varies over time.

22. The engine control system according to claim 21, wherein the variation of the attenuation parameter is linear or is a function.

23. The engine control system according to claim 13, wherein the control parameter indicating the air flow requirement includes parameters related to the air flow.

24. The engine control system according to claim 23, wherein the parameters related to the air flow include the throttle position, intake manifold pressure and torque.
